# FASCICULE DE BREVET EUROPEEN

(11) **EP 4 184 138 B1**
(45) Date de publication et mention de la délivrance du brevet: **04.12.2024**
(21) Numéro de dépôt: 22208381.8
(22) Date de dépôt: 18.11.2022
(51) Int. Cl.: G01L 1/14, B25J 13/08, G01D 5/24, G01L 5/22

(54) **CAPTEUR CAPACITIF**
KAPAZITIVER SENSOR
CAPACITIVE SENSOR

(30) Priorité: 23.11.2021 FR 2112401
(43) Date de publication de la demande: 24.05.2023
(73) Titulaire: Valeo Comfort and Driving Assistance, 94000 Créteil (FR)
(72) Inventeur: MUSAT, Ciprian, 94000 Créteil (FR); BERRY, Martial, 94000 Créteil (FR)
(74) Mandataire: Delplanque, Arnaud

(56) Documents cités:
- DE-A1- 102013 021 575
- GB-A- 2 488 600

## Description

### DOMAINE TECHNIQUE DE L'INVENTION

La présente invention concerne de manière générale les capteurs de force capacitifs.

Elle concerne plus particulièrement un capteur capacitif.

L'invention trouve une application particulièrement avantageuse dans les capteurs de force pour surface tactile, par exemple au sein d'un véhicule automobile.

Elle concerne également un capteur de force comprenant un tel capteur capacitif.

### ETAT DE LA TECHNIQUE

Un capteur capacitif comprend classiquement deux électrodes s'étendant en regard l'une de l'autre et mobiles l'une par rapport à l'autre. Ces deux électrodes forment alors condensateur défini par une capacité de couplage qui est mesurée grâce à un circuit de mesure électrique fournissant un courant alternatif.

La capacité mesurée dépend alors de la distance entre ces deux électrodes. Après calibration du capteur, la capacité permet de mesurer la distance entre les deux électrodes.

Classiquement, une électrode est disposée sur un élément mobile, par exemple sur une surface tactile, tandis que l'autre électrode est disposée sur un élément fixe, par exemple par rapport au tableau de bord d'un véhicule automobile. Avec un ressort de raideur connue interposé entre l'élément mobile et l'élément fixe, mesurer la capacité permet de déterminer la force exercée sur l'élément mobile, par exemple par le doigt d'un utilisateur.

Toutefois, ce montage nécessite qu'une partie du circuit de mesure soit reliée à l'électrode de l'élément mobile et puisse être mise en mouvement lorsque l'élément mobile est déplacé. Typiquement, l'électrode de l'élément mobile est reliée au circuit de mesure, porté par l'élément fixe, par un fil électrique.

Ce contact électrique filaire présente plusieurs inconvénients. Tout d'abord, l'assemblage du capteur capacitif est complexe puisqu'il faut réaliser un contact électrique (par exemple une soudure pour relier le fil électrique à l'électrode de l'élément mobile) une fois l'élément mobile positionné. Il faut alors réaliser ce contact électrique dans un espace exigu. Il faut ensuite s'assurer que le fil et le contact électrique ne se dégradent pas à cause du mouvement de l'élément mobile. Enfin, le faible courant électrique circulant dans le fil électrique favorise l'oxydation des contacts électriques.

GB2488600 et DE102013021575 décrivent des capteurs capacitifs.

### PRESENTATION DE L'INVENTION

Dans ce contexte, on propose selon l'invention un capteur capacitif comprenant :
- un support comprenant une première surface extérieure sur laquelle s'étend une première électrode et une deuxième surface extérieure, inclinée par rapport à la première surface extérieure, sur laquelle s'étend une deuxième électrode ;
- une pièce, mobile par rapport au support, la pièce comprenant une première surface conductrice et une deuxième surface conductrice en contact électrique avec la première surface conductrice, la première surface conductrice s'étendant en regard de la première électrode et la deuxième surface conductrice s'étendant en regard de la deuxième électrode de sorte à créer une capacité de couplage entre la première électrode et la deuxième électrode ;
- un circuit de mesure conçu pour mesurer la capacité de couplage.

Ainsi, grâce à l'invention, le couplage des deux électrodes est réalisée au moyen de la pièce et cela sans disposer de fil électrique entre la pièce et le support l'électrode de l'élément mobile, qui est ici la pièce. En d'autres termes, aucune partie du circuit électrique de mesure ne subit de déformation lors du mouvement de la pièce.

Par conséquent, cette absence de fil électrique simplifie l'assemblage du capteur par rapport à un capteur conventionnel puisqu'il n'est pas nécessaire de réaliser de contact électrique une fois l'élément mobile positionné. De plus, le mouvement de la pièce n'entraine pas d'usure des parties du circuit électrique de mesure. Enfin, l'absence de contact entre le circuit de mesure et la pièce prévient les risques d'oxydation.

De plus, les faces extérieures inclinées l'une par rapport à l'autre permettent au capteur capacitif selon l'invention de détecter un mouvement de la pièce selon une direction privilégiée.

D'autres caractéristiques avantageuses et non limitatives du capteur capacitif conforme à l'invention, prises individuellement ou selon toutes les combinaisons techniquement possibles, sont les suivantes :
- la pièce est agencée pour être mobile selon un axe longitudinal incliné par rapport à la première surface extérieure du support, la deuxième surface s'étendant parallèlement à l'axe longitudinal ;
- la première surface extérieure du support est plane et dans lequel l'axe longitudinal est perpendiculaire à la première surface extérieure ;
- la deuxième surface s'étend selon une surface cylindrique dont les génératrices sont parallèles à l'axe longitudinal, la deuxième électrode s'étend, au moins en partie, selon l'axe longitudinal ;
- la surface cylindrique est une surface cylindrique de révolution ;
- la deuxième électrode entoure la deuxième surface ;
- la deuxième surface s'étend au-delà de la deuxième surface extérieure du support, selon l'axe longitudinal et à l'opposé de la première surface ;
- la distance entre la première électrode et la deuxième électrode est supérieure à la distance entre la première électrode et la première surface conductrice ;
- le support comprend un plan de masse actif interposé entre la première électrode et la deuxième électrode ;
- la capacité de couplage est fonction d'une première capacité entre la première surface conductrice et la première électrode et d'une deuxième capacité entre la deuxième surface conductrice et de la deuxième électrode ;
- la capacité de couplage est équivalente à un montage électrique constitué de la première capacité et à la deuxième capacité en série ;
- la deuxième capacité est supérieure à la première capacité ;
- la première surface s'étend parallèlement à la première électrode et la deuxième surface s'étendant parallèlement à la deuxième électrode ;
- le capteur comprend un élément intermédiaire en matériau isolant interposée entre la deuxième surface et la deuxième électrode.

L'invention propose également un capteur de force comprenant :
- un capteur capacitif tel que présenté ci-dessus ; et
- un module conçu pour déterminer une distance entre le support et la pièce sur la base de la capacité de couplage.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] est une vue schématique en coupe d'un capteur capacitif selon l'invention.
[Fig. 2] est une vue schématique en perspective éclatée du capteur capacitif de la figure 1.

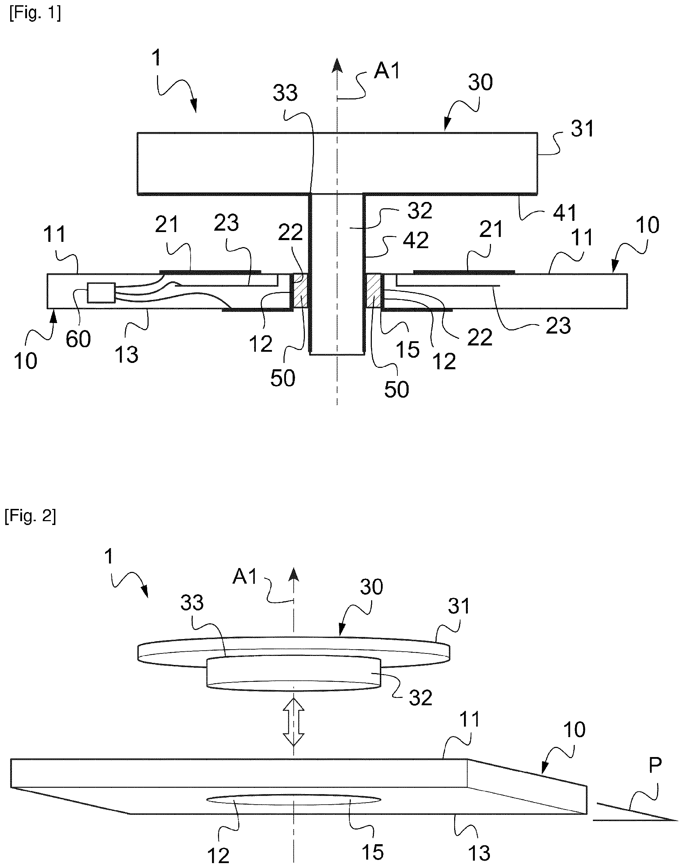

Sur la figure 1, on a représenté un capteur capacitif 1 comprenant :
- un support 10 ;
- une pièce 30 ; et
- un circuit de mesure 60 électronique.

Comme le montre bien la figure 2, le support 10 s'étend dans un plan de référence P (qui est perpendiculaire au plan de la figure 1). Le support 10 présente une épaisseur, sa dimension selon une direction perpendiculaire au plan de référence P, inférieure à ses dimensions dans le plan de référence P. Ainsi, le support 10 présente globalement la forme d'une plaque.

Comme le montre la figure 1, le support 10 présente une première surface extérieure 11 et une deuxième surface extérieure 12 inclinée par rapport à la première surface extérieure 11. La première surface extérieure 11 et la deuxième surface extérieure 12 présente donc des orientations différentes. On entend ici par « inclinée » que ces deux surfaces extérieures forment un angle non nul, c'est-à-dire différent de zéro. Ainsi, ici, la première surface extérieure 11 et la deuxième surface extérieure 12 présente une inclinaison l'une par rapport à l'autre en ce sens qu'une ligne d'intersection entre ces deux surfaces extérieures présente un angle non nul. Ici cela signifie plus particulièrement que la première surface extérieure 11 et la deuxième surface extérieure 12 ne s'étendent pas dans un même plan.

La deuxième surface extérieure 12 est par exemple inclinée par rapport première surface extérieure 11 d'un angle interne compris entre 80 et 110 degrés. Ici, la première surface extérieure 11 s'étend plus spécifiquement parallèlement au plan de référence P. La deuxième surface extérieure 12 quant à elle s'étend plus spécifiquement perpendiculairement au plan de référence P. En d'autres termes, la deuxième surface extérieure 12 est ici inclinée par rapport première surface extérieure 11 d'un angle interne égal à 90 degrés.

Comme cela apparait bien sur la figure 2, la deuxième surface extérieure 12 délimite une ouverture 15, ici cylindrique de révolution, traversant le support 10 sur toute son épaisseur. La deuxième surface extérieure 12 s'étend donc selon une surface cylindrique de révolution dont les génératrices sont ici perpendiculaires au plan de référence P. Cette ouverture 15 cylindrique de révolution est particulièrement simple à usiner.

Enfin, le support 10 présente une surface extérieure inférieure 13 opposée à la première surface extérieure 11. La surface extérieure inférieure 13 est également parallèle au plan de référence P. La deuxième surface extérieure 12 relie la surface extérieure inférieure 13 à la première surface extérieure 11.

La première surface extérieure 11 et la surface extérieure inférieure 13 sont donc des faces planes du support 10 tandis que la deuxième surface extérieure 12 est une face courbe du support 10.

Le support 10 comprend une première électrode 21 s'étendant sur la première surface extérieure 11 et une deuxième électrode 22, s'étendant en partie sur la deuxième surface extérieure 12. La première électrode 21 s'étend ainsi parallèlement au plan de référence P sur tout le pourtour de l'ouverture 15. Comme le montre la figure 1, la première électrode 21 s'étend à distance de l'ouverture 15.

Comme le montre la figure 1, la deuxième électrode 22 s'étend en partie sur la deuxième surface extérieure 12, c'est-à-dire perpendiculairement au plan de référence P, et en partie sur la surface extérieure inférieure 13. La deuxième électrode 22 s'étend ici sur toute la deuxième surface extérieure 12 et également sur une partie de la surface extérieure inférieure 13.

La première électrode 21 et la deuxième électrode 22 sont des électrodes pleines chacune formée par un film de matériau conducteur. En variante, la première électrode et la deuxième électrode peuvent être des maillages de fils conducteurs.

La première électrode 21 et la deuxième électrode 22, ainsi que le circuit de mesure 60, font par exemple partie d'une carte électronique imprimée sur le support 10. Comme détaillé ultérieurement, le circuit de mesure 60 est conçu pour mesurer une capacité de couplage, appelée troisième capacité de couplage, entre la première électrode 21 et la deuxième électrode 22.

La première électrode 21 et la deuxième électrode 22 sont ici découplées au niveau du support 10. Cela permet, comme expliqué par la suite, de coupler la première électrode 21 et la deuxième électrode 22 majoritairement, et de préférence exclusivement, par la biais de la pièce 30. On entend ici par « découplées » que les électrodes n'interagissent pas l'une avec l'autre.

Pour cela, dans l'exemple illustré en figure 1, le support 10 comprend un plan de masse actif 23. Le plan de masse actif 23 est relié au potentiel de la première électrode 21 ou de la deuxième électrode 22 et agit alors comme une troisième électrode coupant les lignes de champs qui pourraient circuler entre la première électrode 21 et la second électrode 22. En pratique, la première électrode 21 ou la deuxième électrode 22 est l'électrode émettrice et l'autre la réceptrice. Pour jouer son rôle de blindage entre les électrodes, le plan de masse actif 23 est par exemple alimenté avec le même signal (courant alternatif) que l'électrode émettrice. Ainsi, la capacité de couplage entre l'électrode émettrice et le plan de masse actif 23 est constante.

Pour découpler les électrodes, on peut aussi prévoir de disposer la première électrode 21 et la deuxième électrode 22 éloignées l'une de l'autre. On peut alors positionner les électrodes pour que la distance entre la première électrode 21 et la deuxième électrode 22 est supérieure à la distance entre la première électrode 21 et la première surface 41 (proportions non respectées sur la figure 1). La distance entre la première électrode 21 et la deuxième électrode 22 est ici définie comme la plus faible distance entre la première électrode 21 et la deuxième électrode 22. Cette distance correspond par exemple à la distance entre la première électrode 21 à la deuxième surface extérieure 12 ou à l'épaisseur du support 10.

Ainsi, grâce au découplage, lorsque le signal est émis par l'électrode émettrice, les lignes de champ circulent vers pièce 30 et non pas vers l'autre électrode. Le signal passe ainsi de l'électrode émettrice à l'électrode réceptrice par la pièce 30.

La pièce 30 est électriquement isolée du support 10 en ce sens qu'elle est physiquement séparée de ce dernier. Ainsi, on entend par « électriquement isolée » qu'il n'existe aucun contact électrique, par exemple de fil électrique, reliant la pièce 30 et le support 10, c'est-à-dire aucun contact physique entre une partie électriquement conductrice de la pièce 30 et une partie électriquement conductrice du support 10.

La pièce 30 est de plus mobile par rapport au support 10. La pièce 30 est mobile, ici en translation, selon une direction particulière appelée axe longitudinal A1. Ainsi, la pièce 30 peut effectuer des mouvements de translation, par exemple compris entre 0,1 mm et 1 mm, le long de l'axe longitudinal A1.

L'axe longitudinal A1 est incliné par rapport au plan de référence P en ce sens que l'axe longitudinal A1 n'est pas parallèle au plan de référence P. Dans l'exemple illustré en figure 1 et 2, l'axe longitudinal A1 est plus particulièrement perpendiculaire au plan de référence P. Sur les figures 1 et 2, la pièce 30 peut donc effectuer un mouvement de translation de haut en bas.

Comme le montre la figure 1, la pièce 30 comprend une première partie 31 s'étendant en vis-à-vis de la première surface extérieure 11 du support 10 et une deuxième partie 32 s'étendant en vis-à-vis de la deuxième surface extérieure 12 du support 10. La deuxième partie 32 s'étend plus particulièrement au travers de l'ouverture 15.

Comme le montre la figure 2, la première partie 31 présente globalement une forme de disque, ici centré sur l'axe longitudinal A1. La première partie 31 s'étendant parallèlement au plan de référence P, et donc ici perpendiculairement à l'axe longitudinal A1.

La deuxième partie 32 présente une forme de cylindre, ici un cylindre de révolution centré sur l'axe longitudinal A1.

Ainsi, comme le montre la figure 1, la pièce 30 présente une section en T dans un plan contenant l'axe longitudinal A1 (par exemple le plan de la figure 1). Cette forme en T permet un agencement particulièrement compact entre la pièce 30 et du support 10. Comme le montre la figure 1, l'axe longitudinal A1 est ici un axe de symétrie pour la pièce 30.

Comme représenté sur la figure 1, la première partie 31 comprend une première surface conductrice 41, appelée par la suite première surface 41, et la deuxième partie 32 comprend une deuxième surface conductrice 42, appelée par la suite deuxième surface 42. La première surface 41 la deuxième surface 42 sont par exemple réalisées par dépôt d'un film métallique sur la première partie 31 et respectivement sur la deuxième partie 32. L'épaisseur de ce film métallique est par exemple comprise entre 50 µm et 150 µm. Ce film métallique est par exemple réalisé en en aluminium, en laiton ou en cuivre. Ce film est par exemple déposé par laser, notamment par un procédé de type LDS (de l'anglais « Laser Direct Structuring »). La première partie 31 et la deuxième partie 32 sont quant à elles en matériau plastique.

On peut aussi prévoir que la pièce 30 dans son ensemble soit réalisée dans un matériau électriquement conducteur. Dans ce cas, la première surface conductrice 41 et la deuxième surface conductrice 42 sont simplement constituées par la surface externe de la pièce 30. Dans ce cas, la pièce 30 est par exemple réalisée en aluminium, en laiton ou en cuivre.

Comme le montre la figure 1, la première surface 41 s'étend sur toute une portion de la première partie 31 faisant face au support 10. La deuxième surface 42 s'étend sur tout le pourtour cylindrique de la deuxième partie 32.

Ainsi, la première surface 41 et la deuxième surface 42 sont en contact électrique au niveau d'une ligne de jonction 33 entre la première partie 31 et la deuxième partie 32. Cela signifie d'un courant électrique peut circuler entre la première surface 41 et la deuxième surface 42.

La pièce 30 est donc agencée, en particulier ici grâce à sa forme en T, pour que la première surface 41 s'étende en regard de la première électrode 21, en ce sens qu'elles sont orientées l'une vers l'autre en vis-à-vis, et que la deuxième surface 42 s'étende en regard de la deuxième électrode 22. En d'autres termes, la première surface 41 fait face à la première électrode 21 et la deuxième surface 42 fait face à la deuxième électrode 22. La deuxième surface 42 s'étend en particulier en regard de la partie de la deuxième électrode 22 située sur la deuxième surface extérieure 12 du support 10. La deuxième électrode 22 entoure, et plus particulièrement encercle, la deuxième surface 42.

Plus spécifiquement, la première surface 41 s'étend parallèlement à la première électrode 21 et la deuxième surface 42 s'étend parallèlement à la deuxième électrode 22. La deuxième surface 42 présentant donc la même inclinaison par rapport à la première surface 41 que la deuxième surface extérieure 12 par rapport la première surface extérieure 11.

La première surface 41 présente par exemple les mêmes dimensions, notamment ici le même diamètre externe, que la première électrode 21. En variante, la première surface peut présenter des dimensions supérieures à celles de la première et ainsi dépasser de cette dernière.

La première surface 41 s'étend par exemple à une distance comprise entre 50 µm et 1 mm de la première électrode 21. La deuxième surface 12 s'étend par exemple à une distance comprise entre 50 µm et 150 µm de la deuxième électrode 22.

Le fait que la première surface 41 s'étende en regard de la première électrode 21 génère une première capacité de couplage entre ces dernières. Ici, le terme capacité de couplage recouvre aussi les termes capacité mutuelle et induction électromagnétique. En d'autres termes, la première surface 41 et la première électrode 21 forment deux armatures d'un condensateur de capacité égale à la première capacité de couplage.

La première capacité de couplage dépend donc notamment de la surface de la première surface 41, de la surface de la première électrode 21 et de la distance entre la première surface 41 et la première électrode 21. Les deux armatures étant ici séparées par un matériau isolant tel que l'air, un vernis ou un matériau diélectrique.

De même, le fait que la deuxième surface 42 s'étende en regard de la deuxième électrode 22 génère une deuxième capacité de couplage entre ces dernières. En d'autres termes, la deuxième surface 42 et la deuxième électrode 22 forment deux armatures d'un condensateur de capacité égale à la deuxième capacité de couplage.

La première surface 41 étant en contact électrique avec la deuxième surface 42, il existe donc une troisième capacité de couplage, entre la première électrode 21 et la deuxième électrode 22, qui dépend ici de la première capacité de couplage et de la deuxième capacité de couplage. En d'autres termes, la troisième capacité de couplage est ici définie comme le résultat de la mesure capacitive entre la première électrode 21 et la deuxième électrode 22.

La pièce 30 agissant comme un pont entre les électrodes, la troisième capacité de couplage est plus spécifiquement équivalente un circuit électrique connectant en série la première capacité de couplage et la deuxième capacité de couplage. Cela signifie ici que la troisième capacité de couplage, notée C3, peut être calculée par la formule suivante : C3 = (C1*C2) / (C1+C2), avec C1 la première capacité de couplage et C2 la deuxième capacité de couplage.

Lors d'un déplacement de la pièce 30 par rapport au support 10, la distance entre la première électrode 21 et la première surface 41 varie, ce qui entraine donc une variation de la première capacité de couplage et par conséquent une variation de la troisième capacité de couplage.

Par opposition, lors de ce même déplacement, la distance entre la deuxième électrode 22 et la deuxième surface 42 ne varie pas, ou très faiblement, puisque ces dernières s'étendent toutes deux parallèlement à l'axe longitudinal A1, c'est-à-dire parallèlement au déplacement. Ainsi, lors de ce déplacement, la deuxième capacité de couplage ne varie pas, ou très faiblement. On s'assure ainsi que la variation de la troisième capacité de couplage est très majoritairement, voire exclusivement, due à une variation de la première capacité de couplage.

En mesurant cette variation de la troisième capacité de couplage grâce au circuit de mesure 60, il est donc possible de déduire la variation de la première capacité de couplage et donc l'amplitude du déplacement de la première électrode 21 par rapport à la première surface 41, c'est-à-dire l'amplitude du déplacement la pièce 30 par rapport au support 10.

Comme le montre la figure 1, il est prévu que la deuxième surface 42 s'étende de part et d'autre de l'ouverture 15. Ainsi, la deuxième surface 42 s'étend au-delà de la deuxième surface extérieure 12 du support 10 selon l'axe longitudinal A1, ici à la fois vers et à l'opposé de la première surface 41, c'est-à-dire à la fois du côté de la première surface extérieure 11 et du côté de la surface extérieure inférieure 13 du support 10. La deuxième électrode 22 fait ainsi toujours face à la deuxième surface 42 malgré le déplacement de cette dernière, l'amplitude maximum du déplacement étant inférieure à l'extension de la deuxième surface 42 au-delà de la deuxième surface extérieure 12. Cela permet de limiter encore plus la variation de la deuxième capacité de couplage lors d'un déplacement de la pièce 30.

Ici, la deuxième capacité de couplage est supérieure à la première capacité de couplage, ce qui permet de limiter l'influence d'une variation de la deuxième capacité de couplage sur la troisième capacité de couplage.

De préférence, la deuxième capacité de couplage est largement supérieure à la première capacité de couplage, par exemple 5 à 10 fois supérieure. Ainsi, la troisième capacité de couplage est sensiblement égale à la première capacité de couplage. Par conséquent, même lorsque la deuxième capacité de couplage varie légèrement lors du déplacement de la pièce 30, cette variation n'a pas d'influence sur la relation entre la troisième capacité de couplage et l'amplitude du déplacement.

Cette valeur élevée de la deuxième capacité de couplage est notamment atteinte grâce au fait que la deuxième électrode 22 s'étende aussi sur la surface extérieure inférieure 13 et que la deuxième surface 42 s'étende au-delà de la deuxième surface extérieure 12. Cette valeur élevée de la deuxième capacité de couplage est aussi atteinte en agençant la deuxième électrode 22 et la deuxième surface 42 proche l'une de l'autre.

Le capteur capacitif 1 comprend aussi ici un élément intermédiaire 50 réalisée en matériau électriquement isolant et qui est interposée entre la deuxième surface 42 et la deuxième électrode 22, ici sur toute l'épaisseur du support 10. L'élément intermédiaire 50 est donc disposée dans l'ouverture 15. Comme le montre la figure 1, l'élément intermédiaire 50 forme ici un anneau de section rectangulaire dans un plan contenant l'axe longitudinal A1. L'élément intermédiaire peut être réalisé en tout matériaux diélectrique tel que du nylon 66, du polycarbonate, ou du polyoxyméthylène.

Avantageusement, l'élément intermédiaire 50 permet d'éviter un couplage direct, c'est-à-dire un contact physique, entre la deuxième surface 42 et la deuxième électrode 22 bien que ces dernières soient proches. L'élément intermédiaire permet également de guider le déplacement de la deuxième surface 42 de façon à éviter tout jeu, c'est-à-dire toute variation de la distance entre la deuxième surface 42 et la deuxième électrode 22.

La mise en oeuvre du capteur capacitif 1 permet de réaliser un capteur de de force. Le capteur de force selon l'invention comprend ici le capteur capacitif 1, un module et un élément élastique.

Le capteur de force est par exemple intégré à un tableau de bord de véhicule. La pièce 30 est alors par exemple fixée au verso d'une surface tactile sur laquelle un utilisateur exerce une force.

Le module, qui comprend par exemple un processeur et une mémoire, est conçu pour déterminer, tel qu'expliqué supra, la distance entre le support 10 et la pièce 30 sur la base de la troisième capacité de couplage. Le module est ici conçu pour déterminer un déplacement de la pièce mobile 30 par rapport à une positon d'équilibre qui correspond par exemple à une position de la surface tactile au repos.

L'élément élastique, qui est par exemple un ressort, est par exemple interposé entre le support 10 et la pièce 30, typiquement entre la première surface extérieure 11 et la première partie 31, ou entre le support 10 et la surface tactile. La raideur de l'élément élastique selon l'axe longitudinal A1 est prédéterminée. Ceci permet au module de calculer la force déplaçant la pièce 30 hors de la position d'équilibre, c'est-à-dire la force exercée par l'utilisateur sur la surface tactile. Déterminer cette force permet par exemple de mettre en oeuvre un retour haptique approprié.

Le capteur capacitif 1 n'est nullement limité à l'exemple illustré aux figures 1 et 2. L'homme du métier saura par exemple apporter toute variante conforme à l'invention à la forme de la pièce et à la forme du support. Ainsi, la première partie de la pièce peut présenter une forme rectangulaire. Dans ce cas, la première électrode présente alors de préférence une forme rectangulaire. La deuxième partie de la pièce peut être un cylindre de section rectangulaire ou hexagonal, l'ouverture présente alors forme correspondante.

La deuxième surface extérieure du support n'est pas nécessairement formée par l'ouverture dans le support. La deuxième surface extérieure peut être un bord du support, par exemple un bord plan. Dans ce cas la pièce peut présenter une forme en L constituer de deux parallélépipèdes rectangles aplatis.

Le support peut par exemple être courbé, en particulier sa première surface extérieure. La première partie de la pièce présente alors de préférence une courbe identique.

L'élément intermédiaire peut par exemple être remplacé par de l'air, c'est-à-dire par un espace laissé libre.

## Revendications

1. Capteur capacitif (1) comprenant :
- un support (10) comprenant une première surface extérieure (11) sur laquelle s'étend une première électrode (21) et une deuxième surface extérieure (12), sur laquelle s'étend une deuxième électrode (22) ;
- une pièce (30), mobile par rapport au support (10), la pièce (30) comprenant une première surface conductrice (41) et une deuxième surface conductrice (42) en contact électrique avec la première surface conductrice (41), la première surface conductrice (41) s'étendant en regard de la première électrode (21) et la deuxième surface conductrice (42) s'étendant en regard de la deuxième électrode (22) de sorte à créer une capacité de couplage entre la première électrode (21) et la deuxième électrode (22) ;
- un circuit de mesure (60) conçu pour mesurer la capacité de couplage, ledit capteur étant **caractérisé en ce que** la deuxième surface extérieure est inclinée par rapport à la première surface extérieure.

2. Capteur capacitif (1) selon la revendication 1, dans lequel la pièce (30) est agencée pour être mobile selon un axe longitudinal (A1) incliné par rapport à la première surface extérieure (11) du support (10), la deuxième surface conductrice (42) s'étendant parallèlement à l'axe longitudinal (A1).

3. Capteur capacitif (1) selon la revendication 2, dans lequel la première surface extérieure (11) du support (10) est plane et dans lequel l'axe longitudinal (A1) est perpendiculaire à la première surface extérieure (11).

4. Capteur capacitif (1) selon l'une des revendications 2 à 3, dans lequel la deuxième surface conductrice (42) s'étend selon une surface cylindrique dont les génératrices sont parallèles à l'axe longitudinal (A1) et dans lequel la deuxième électrode (22) s'étend, au moins en partie, selon l'axe longitudinal (A1)

5. Capteur capacitif (1) selon la revendication 4, dans lequel la surface cylindrique est une surface cylindrique de révolution.

6. Capteur capacitif (1) selon la revendication 4 ou 5, dans lequel la deuxième électrode (22) entoure la deuxième surface conductrice (42).

7. Capteur capacitif (1) selon l'une des revendications 2 à 6, dans lequel la deuxième surface conductrice (42) s'étend au-delà de la deuxième surface extérieure (12) du support (10), selon l'axe longitudinal (A1) et à l'opposé de la première surface conductrice (41).

8. Capteur capacitif (1) selon l'une des revendications 1 à 7, dans lequel la plus faible distance entre la première électrode (21) et la deuxième électrode (22) est supérieure à la distance entre la première électrode (21) et la première surface conductrice (41).

9. Capteur capacitif (1) selon l'une des revendications 1 à 8, dans lequel le support (10) comprend un plan de masse actif (23) interposé entre la première électrode (21) et la deuxième électrode (22).

10. Capteur capacitif (1) selon l'une des revendications 1 à 9, dans lequel la capacité de couplage est fonction d'une première capacité entre la première surface conductrice (41) et la première électrode (21) et d'une deuxième capacité entre la deuxième surface conductrice (42) et de la deuxième électrode (22).

11. Capteur capacitif (1) selon la revendication 10, dans lequel la capacité de couplage est équivalente à un montage électrique constitué de la première capacité et à la deuxième capacité en série.

12. Capteur capacitif (1) selon l'une des revendications 2 à 7, pris dans la dépendance de la revendication 11, dans lequel la deuxième capacité est supérieure à la première capacité.

13. Capteur capacitif (1) selon l'une des revendications 1 à 12, dans lequel la première surface conductrice (41) s'étend parallèlement à la première électrode (21) et dans lequel la deuxième surface conductrice (42) s'étendant parallèlement à la deuxième électrode (22).

14. Capteur capacitif (1) selon l'une des revendications 1 à 13, comprenant un élément intermédiaire (50) en matériau isolant interposé entre la deuxième surface conductrice (42) et la deuxième électrode (22).

15. Capteur de force comprenant :
- un capteur capacitif (1) selon l'une des revendications 1 à 14 ;
- un module conçu pour déterminer une distance entre le support (10) et la pièce (30) sur la base de la capacité de couplage.

## Patentansprüche

1. Kapazitiver Sensor (1), umfassend:
- einen Träger (10), umfassend eine erste Außenfläche (11), auf der sich eine erste Elektrode (21) erstreckt, und eine zweite Außenfläche (12), auf der sich eine zweite Elektrode (22) erstreckt;
- ein Teil (30), das in Bezug auf den Träger (10) beweglich ist, wobei das Teil (30) eine erste leitfähige Fläche (41) und eine zweite leitfähige Fläche (42) in Kontakt mit der ersten leitfähigen Fläche (41) umfasst, wobei sich die erste leitfähige Fläche (41) gegenüber der ersten Elektrode (21) erstreckt und wobei sich die zweite leitfähige Fläche (42) gegenüber der zweiten Elektrode (22) erstreckt, so dass eine Kopplungskapazität zwischen der ersten Elektrode (21) und der zweiten Elektrode (22) erzeugt wird;
- einen Messkreis (60), der dazu ausgestaltet ist, die Kopplungskapazität zu messen, wobei der Sensor **dadurch gekennzeichnet ist, dass** die zweite Außenfläche in Bezug auf die erste Außenfläche geneigt ist.

2. Kapazitiver Sensor (1) nach Anspruch 1, wobei das Teil (30) dazu eingerichtet ist, entlang einer in Bezug auf die erste Außenfläche (11) des Trägers (10) geneigten Längsachse (A1) beweglich zu sein, wobei sich die zweite leitfähige Fläche (42) parallel zu der Längsachse (A1) erstreckt.

3. Kapazitiver Sensor (1) nach Anspruch 2, wobei die erste Außenfläche (11) des Trägers (10) eben ist und wobei die Längsachse (A1) senkrecht zu der ersten Außenfläche (11) ist.

4. Kapazitiver Sensor (1) nach einem der Ansprüche 2 bis 3, wobei sich die zweite leitfähige Fläche (42) entlang einer zylindrischen Fläche erstreckt, deren Mantellinien parallel zu der Längsachse (A1) sind, und wobei sich die zweite Elektrode (22), zumindest teilweise, entlang der Längsachse (A1) erstreckt.

5. Kapazitiver Sensor (1) nach Anspruch 4, wobei die zylindrische Fläche eine rotationssymmetrische zylindrische Fläche ist.

6. Kapazitiver Sensor (1) nach Anspruch 4 oder 5, wobei die zweite Elektrode (22) die zweite leitfähige Fläche (42) umgibt.

7. Kapazitiver Sensor (1) nach einem der Ansprüche 2 bis 6, wobei sich die zweite leitfähige Fläche (42) über die zweite Außenfläche (12) des Trägers (10) hinaus erstreckt, entlang der Längsachse (A1) und entgegengesetzt zu der ersten leitfähigen Fläche (41).

8. Kapazitiver Sensor (1) nach einem der Ansprüche 1 bis 7, wobei der geringste Abstand zwischen der ersten Elektrode (21) und der zweiten Elektrode (22) größer als der Abstand zwischen der ersten Elektrode (21) und der ersten leitfähigen Fläche (41) ist.

9. Kapazitiver Sensor (1) nach einem der Ansprüche 1 bis 8, wobei der Träger (10) eine aktive Masseebene (23) umfasst, die zwischen der ersten Elektrode (21) und der zweiten Elektrode (22) angeordnet ist.

10. Kapazitiver Sensor (1) nach einem der Ansprüche 1 bis 9, wobei die Kopplungskapazität eine Funktion einer ersten Kapazität zwischen der ersten leitfähigen Fläche (41) und der ersten Elektrode (21) und von einer zweiten Kapazität zwischen der zweiten leitfähigen Fläche (42) und der zweiten Elektrode (22) ist.

11. Kapazitiver Sensor (1) nach Anspruch 10, wobei die Kopplungskapazität äquivalent zu einer elektrischen Schaltung, die aus der ersten Kapazität und der zweiten Kapazität in Reihe besteht.

12. Kapazitiver Sensor (1) nach einem der Ansprüche 2 bis 7 in Abhängigkeit von Anspruch 11, wobei die zweite Kapazität größer als die erste Kapazität ist.

13. Kapazitiver Sensor (1) nach einem der Ansprüche 1 bis 12, wobei sich die erste leitfähige Fläche (41) parallel zu der ersten Elektrode (21) erstreckt und wobei sich die zweite leitfähige Fläche (42) parallel zu der zweiten Elektrode (22) erstreckt.

14. Kapazitiver Sensor (1) nach einem der Ansprüche 1 bis 13, umfassend ein Zwischenelement (50) aus isolierendem Material, das zwischen der zweiten leitfähigen Fläche (42) und der zweiten Elektrode (22) angeordnet ist.

15. Kraftsensor, umfassend:
- einen kapazitiven Sensor (1) nach einem der Ansprüche 1 bis 14;
- ein Modul, das dazu ausgestaltet ist, einen Abstand zwischen dem Träger (10) und dem Teil (30) auf der Grundlage der Kopplungskapazität zu bestimmen.

## Claims

1. Capacitive sensor (1) comprising:
- a support (10) comprising a first outer surface (11) on which a first electrode (21) extends and a second outer surface (12) on which a second electrode (22) extends;
- a part (30), movable relative to the support (10), the part (30) comprising a first conductive surface (41) and a second conductive surface (42) in electrical contact with the first conductive surface (41), the first conductive surface (41) extending facing the first electrode (21) and the second conductive surface (42) extending facing the second electrode (22) so as to create a coupling capacitance between the first electrode (21) and the second electrode (22);
- a measuring circuit (60) designed for measuring the coupling capacitance, said sensor being **characterized in that** the second outer surface is inclined with respect to the first outer surface.

2. Capacitive sensor (1) according to Claim 1, wherein the part (30) is arranged to be movable along a longitudinal axis (A1) inclined with respect to the first outer surface (11) of the support (10), the second conductive surface (42) extending parallel to the longitudinal axis (A1).

3. Capacitive sensor (1) according to Claim 2, wherein the first outer surface (11) of the support (10) is planar and wherein the longitudinal axis (A1) is perpendicular to the first outer surface (11).

4. Capacitive sensor (1) according to one of Claims 2 to 3, wherein the second conductive surface (42) extends along a cylindrical surface the generatrices of which are parallel to the longitudinal axis (A1) and wherein the second electrode (22) extends, at least in part, along the longitudinal axis (A1).

5. Capacitive sensor (1) according to Claim 4, wherein the cylindrical surface is a cylindrical surface of revolution.

6. Capacitive sensor (1) according to Claim 4 or 5, wherein the second electrode (22) surrounds the second conductive surface (42).

7. Capacitive sensor (1) according to one of Claims 2 to 6, wherein the second conductive surface (42) extends beyond the second outer surface (12) of the support (10), along the longitudinal axis (A1) and away from the first conductive surface (41).

8. Capacitive sensor (1) according to one of Claims 1 to 7, wherein the shortest distance between the first electrode (21) and the second electrode (22) is greater than the distance between the first electrode (21) and the first conductive surface (41).

9. Capacitive sensor (1) according to one of Claims 1 to 8, wherein the support (10) comprises a live ground plane (23) interposed between the first electrode (21) and the second electrode (22).

10. Capacitive sensor (1) according to one of Claims 1 to 9, wherein the coupling capacitance is a function of a first capacitance between the first conductive surface (41) and the first electrode (21) and of a second capacitance between the second conductive surface (42) and the second electrode (22).

11. Capacitive sensor (1) according to Claim 10, wherein the coupling capacitance is equivalent to an electrical arrangement consisting of the first capacitance and the second capacitance mounted in series.

12. Capacitive sensor (1) according to one of Claims 2 to 7 when dependent on Claim 11, wherein the second capacitance is greater than the first capacitance.

13. Capacitive sensor (1) according to one of Claims 1 to 12, wherein the first conductive surface (41) extends parallel to the first electrode (21) and wherein the second conductive surface (42) extends parallel to the second electrode (22).

14. Capacitive sensor (1) according to one of Claims 1 to 13, comprising an intermediate element (50) of insulating material interposed between the second conductive surface (42) and the second electrode (22).

15. Force sensor comprising:
- a capacitive sensor (1) according to one of Claims 1 to 14;
- a module designed to determine a distance between the support (10) and the part (30) on the basis of the coupling capacitance.
